# EUROPÄISCHE PATENTANMELDUNG

(11) **EP 1 288 852 A2**
(43) Veröffentlichungstag der Anmeldung: **05.03.2003**
(21) Anmeldenummer: 02014954.8
(22) Anmeldetag: 08.07.2002
(51) Int. Cl.: G06K 19/06

(54) **Ticket-System**

(30) Priorität: 14.07.2001 DE 10134335
(71) Anmelder: Bundesdruckerei GmbH, 10958 Berlin (DE)
(72) Erfinder: Domes, Jan, 10437 Berlin (DE)

(57) **Zusammenfassung**

Es wird ein Ticket und ein Verfahren zur Erstellung und Kontrolle eines solchen, eine Vorrichtung zur Erstellung eines Tickets, und eine Kontrolleinrichtung für ein Ticket, ein Verfahren zur Inanspruchnahme einer Leistung sowie ein Entwerter beschrieben, wobei zum Ticket einen zugehörigen Code aufweist, wobei sich der Code aus einem Basiscode und einen Ergänzungscode zusammensetzt. Der Ergänzungscode wird aus einer nach Abschluß des Verkaufs der mit dem Ticket zugänglichen Leistung ermittelten zufälligen Ziffernfolge oder Ziffern- und Buchstabenfolge oder Buchstabenfolge gebildet und ist nachträglich auf dem Ticketträger eintragbar. Der Verkauf des Ticket kann auf einfache Weise über ein Verkaufsportal im Internet oder telefonisch erfolgen. Die Kontrolle des Tickets erfolgt mittels einer Vorrichtung, die den Code mit einem Datenbankeintrag vergleicht, der nach dem Verkauf des Tickets generiert wurde. Außerdem werden in einem bevorzugten Ausführungsbeispiel Teile der Kennzeichnung durch den Entwerter mit dem zum Code zugehörigen Datenbankeintrag verglichen, der die mit dem Ticket verkaufte Leistung repräsentiert.

## Beschreibung

### Stand der Technik

Die Erfindung geht aus von einem Ticket und einem Verfahren zur Erstellung und Kontrolle eines solchen, einer Vorrichtung zur Erstellung eines Tickets und einer Kontrolleinrichtung und einem Verfahren zur Inanspruchnahme einer Leistung sowie einem Entwerter nach Gattung der unabhängigen Ansprüche.

Aus der US 6192349 ist bereits ein Verfahren und eine Vorrichtung zur Erstellung eines Tikkets bekannt, wobei als Ticketträger eine Smart-Card benutzt wird. Zur Erstellung des Tikkets kommuniziert der Ausgeber der Tickets mit dem Mikroprozessor der Smart-Card unter Nutzung von Prüfsummen und einer im Mikroprozessor gespeicherten Geheimzahl. Eine entsprechende Zahl, die das gekaufte Ticket repräsentiert, wird anschließend im Mikroprozessor der Smart-Card gespeichert. Zum Lesen des Tickets wird wiederum eine auf dem Mikroprozessor der Smart-Card gespeicherte Geheimzahl, die öffentliche Geheimzahl, genutzt. Nach dem Lesen des Tickets wird der Mikroprozessor zurückgesetzt, so daß ein nochmaliges Lesen des Tickets verhindert wird.

In der US 5754654 wird ein Verkaufssystem für elektronische Tickets und ein Verfahren zum Verkaufen eines elektronischen Tickets beschrieben, wobei ein Terminal mit der Vorrichtung verbunden ist, wobei vom Terminal eine Ticketanfrage an die Vorrichtung verschickt wird. Bei Vorhandensein des angeforderten Tickets wird von der Vorrichtung an das Terminal eine Anforderung für einen zu zahlenden Betrag geschickt. Wird anschließend der entsprechende Betrag elektronisch bezahlt, dann wird das gekaufte Ticket elektronisch an das Terminal übertragen und in einem Speichermedium, bspw. eine IC-Karte, gespeichert. Nach Abschluß des Verkaufs speichert die Vorrichtung die Daten über das verkaufte Ticket, das gesendete Geld und die Identifikation des Senders. Zur Erhöhung der Sicherheit der übersendeten Daten kann eine Signatur bzw. eine Verschlüsselung benutzt werden.

### Vorteile der Erfindung

Das erfindungsgemäße Ticket und das erfindungsgemäße Verfahren zur Erstellung und das erfindungsgemäße Verfahren zur Kontrolle eines solchen, die erfindungsgemäße Vorrichtung zur Erstellung eines Tickets und die erfindungsgemäße Kontrolleinrichtung haben demgegenüber den Vorteil, daß sie sehr einfach zu bedienen sind und wenig zusätzliche Hilfsmittel benötigt werden. Des weiteren ist vorteilhaft, daß die erstellten Tickets nur sehr schwer fälschbar und einfach zu entwerten sind. Auch die Kosten zur Erstellung eines derartigen Tickets können auch niedrigem Niveau gehalten werden. Ebenfalls als vorteilhaft kann angesehen werden, daß die Benutzer nur kleine Änderungen der bisherigen Verfahrensweise hinnehmen müssen.

Durch die in den Unteransprüchen aufgeführten Maßnahmen sind vorteilhafte Weiterbildungen und Verbesserungen des im unabhängigen Anspruch angegebenen Tickets, des im unabhängigen Anspruchs angegebenen Verfahrens zur Erstellung eines Tickets, des im unabhängigen Anspruch angegebenen Verfahrens zur Kontrolle eines solchen, der im unabhängigen Anspruch angegebenen Vorrichtung zur Erstellung eines Tickets, der im unabhängigen Anspruch angegebenen Kontrolleinrichtung, des im unabhängigen Anspruch angegebenen Verfahrens zur Inanspruchnahme einer Leistung und des im unabhängigen Anspruch angegebenen Entwerters möglich. Besonders vorteilhaft ist dabei, daß das Ticket zusätzlich durch Sicherheitsmerkmale wie Hologramme und Wasserzeichen vor Fälschungen geschützt wird. Des weiteren ist vorteilhaft, daß das Ticket durch eine zusätzliche maschinell lesbare Umsetzung des Codes schneller und ohne Dateneingabe lesbar ist. Die Ausführung des Tickets in Papier- oder Plastikmaterial erlaubt eine kostengünstige Herstellung des Tickets. Es ist weiterhin vorteilhaft, daß verschiedene Verkaufsportale für das Erstellen des Tickets benutzt werden können, so daß der Benutzer größtmögliche Freiheiten dahingehend hat, wie er sein Ticket erstellt. Ein weiterer Vorteil besteht darin, daß das Ticket für eine bestimmte Leistung auch bargeldlos bezahlt werden kann. Es ist möglich, mit dem erfindungsgemäßen Verfahren die verschiedensten Ticketarten zu erstellen. Die anschließende Inanspruchnahme der mit dem Ticket verkauften Leistung kann sehr einfach durch eine Entwertung des Tickets, für die auch herkömmliche Entwerter mit kleinen Abwandlungen verwendet werden können, erfolgen. Es ist weiterhin vorteilhaft, daß mittels des Entwerters sofort die Gültigkeit des Tikkets für die entsprechende in Anspruch genommene Leistung überprüft werden kann. Um eine unbefugte Benutzung der Daten zu verhindern, wird vorteilhafterweise die in eine Datenbank gespeicherten Ticketdaten nach Inanspruchnahme der Leistung gelöscht. Die Erfassung der Ticketdaten erfolgt dabei vorteilhafterweise mittels einer Kamera und Bilderkennungsmethoden bzw. über die Eingabe auf einem Keyboard. Das erfindungsgemäße Verfahren zur Kontrolle eines Tickets hat den Vorteil, daß die Leistungen mittels eines kleinen, mitführbaren Handgerätes erfaßt werden können und somit eine einfache Überprüfung des Tickets möglich ist. Die Erfassung der Ticketdaten kann dabei vorteilhafterweise über eine Kameraaufnahme und Bilderkennungsmethode oder über die Eingabe über ein Keyboard erfolgen. Vorteilhafterweise ist ein fest vorgegebener Bestandteil der Kennzeichnung durch den Entwerter, eine bestimmte Entwertungsmarkierung und/oder das Entwertungsdatum und/oder der Entwertungsbereich.

Die erfindungsgemäße Vorrichtung zur Erstellung eines gültigen Tickets hat den Vorteil, daß sie lediglich mit einem elektronischen Zugang zu einem Verkaufsportal ohne weitere Hilfsmittel eine Erstellung eines Tickets vornehmen kann. Vorteilhaft ist weiterhin, daß die Bezahlung der mit dem Ticket erworbenen Leistung bargeldlos oder mittels Bargeld erfolgen kann. Es können so sehr verschiedene Ticketarten erzeugt werden. Der erfindungsgemäße Entwerter hat den Vorteil, daß das erstellte Ticket sehr einfach entwertet werden kann, ohne daß von dem Benutzer ein völliges "Neulernen" des Ablaufs notwendig ist. Ebenso vorteilhaft ist, daß mit dem Entwerter sofort die Gültigkeit des Tickets überprüft werden kann und die Bereitstellung der Leistung erst nach erfolgreicher Überprüfung erfolgen kann. Vorteilhafterweise erfolgt die Erkennung der Ticketdaten mittels Kameraaufnahmen und Bilderkennungsmethoden oder über die Eingabe der Ticketdaten über ein Keyboard. Auch die erfindungsgemäße Kontrolleinrichtung für ein Ticket ist einfach zu bedienen und kann schnell die Ticketdaten überprüfen. Vorteilhafterweise wird hierzu eine Kamera und Bilderkennungsmethode oder die Eingabe der Ticketdaten über ein Keyboard vorgenommen.

Weitere Vorteile des erfindungsgemäßen Tickets und des erfindungsgemäßen Verfahrens zur Erstellung und des erfindungsgemäßen Verfahrens zur Kontrolle eines solchen, der erfindungsgemäßen Vorrichtung zur Erstellung eines Tickets und der erfindungsgemäßen Kontrolleinrichtung, des erfindungsgemäßen Verfahrens zur Inanspruchnahme einer Leistung sowie des erfindungsgemäßen Entwerters sind der nachfolgenden Beschreibung zu entnehmen.

### Zelchnungen

Ausführungsbeispiele der Erfindung werden in der nachfolgenden Beschreibung anhand von Zeichnungen näher erläutert. Dabei zeigen
Figur 1 einen Träger mit Basiscode für ein erfindungsgemäßes Ticket (schematisch),
Figur 2 und 3 erfindungsgemäße Tickets (schematisch),
Figur 4 ein erfindungsgemäßes Verfahren zur Erstellung eines Tickets (schematisch) und
Figur 5 ein erfindungsgemäßes Verfahren zur Kontrolle eines Tickets (schematisch).

### Beschreibung der Ausführungsbeispiele

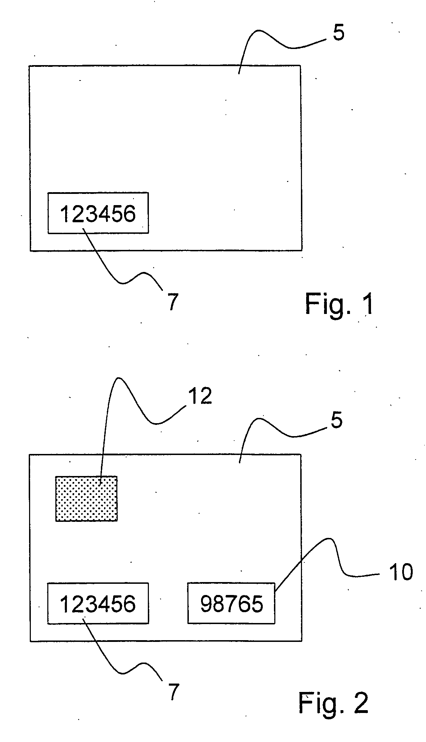

Figur 1 zeigt einen Träger 5, auf dem ein Basiscode 7 abgebildet ist. Ein derartiger Träger ist aus einem Papier- oder einem Plastikmaterial hergestellt. Der Träger 5 enthält einen auf den Träger aufgedruckten, eingestanzten oder sonstwie auf den Träger aufgebrachten Basiscode 7. Dieser Basiscode kann beispielsweise, wie in Figur 1 dargestellt, als Ziffernfolge oder Ziffern- und Buchstabenfolge (Folge bestehend aus Buchstaben und Ziffern) oder als Buchstabenfolge auf dem Träger aufgedruckt sein. Dieser Träger 5 mit dem bereits aufgebrachten Basiscode kann von dem Käufer, der mit dem Kauf des Tickets eine bestimmte Leistung (beispielsweise eine Fahrt mit einem öffentlichen Verkehrsmittel oder einen Eintritt für eine Veranstaltung) in Anspruch nehmen will, für einen kleinen Geldbetrag erworben werden. Da diese Träger ohne zusätzliche Kennzeichnung, die das Ticket für eine bestimmte Leistung auszeichnet, noch nicht verwendbar ist, kann der Käufer auch eine große Anzahl von derartigen Trägern 5 erwerben. Denkbar ist hierbei auch eine kostenlose Bereitstellung von Tikketträgern, wobei sich die Herstellung des Trägers über Werbung, die zusätzlich noch auf dem Ticket angebracht werden kann, finanziert.

Will der Käufer nun ein Ticket für eine bestimmte Leistung wie beispielsweise eine oder mehrere Fahrten mit öffentlichen Verkehrsmitteln wie Bus, Bahn oder Flugzeug oder der einoder mehrmalige Besuch einer Veranstaltung (Konzert oder Kino oder Vortrag oder Lesung) oder den Eintritt in eine Ausstellung oder ein Museum oder eine Sporteinrichtung mit einer oder mehreren Personen in Anspruch nehmen, dann kann er diesen Wunsch über ein Verkaufsportal äußern. Hat der Käufer dann eine bestimmte Ticketart (Leistung) ausgewählt und elektronisch bezahlt, wird vom Verkaufsportal eine zufällige Ziffernfolge oder eine zufällige Ziffern- und Buchstabenfolge oder eine zufällige Buchstabenfolge als "Zufallszahl" bestimmt und diese dem Käufer übermittelt. Diese Zufallszahl, die im Folgenden auch Ergänzungscode genannt wird, wird anschließend vom Käufer auf dem Ticket eingetragen und das erfindungsgemäße Ticket erhält damit für die vom Käufer bestimmte Leistung ihre Gültigkeit. In der folgenden Beschreibung wird der Begriff "Zahl" im weitesten Sinne gebraucht und umfaßt eine Ziffernfolge, eine Ziffern- und Buchstabenfolge und eine Buchstabenfolge. In Figur 2 ist ein derartiges Ticket, das eine Gültigkeit besitzt, schematisch dargestellt. Das Ticket weist analog zu Figur 1 einen Träger 5 und einen Basiscode 7 auf. In einem Bereich, der nicht den Basiscode 7 enthält ist nun der Ergänzungscode 10 eingetragen. Der Ergänzungscode 10 kann in einem ersten Ausführungsbeispiel mit einem Schreibgerät wie Kugelschreiber, Filzstift oder Füller auf dem Träger 5 eingetragen werden. Vorzugsweise erfolgt dies in ein bestimmtes, vordefiniertes Feld mit einer bestimmten, vordefinierten Schreibweise, so daß die Ziffern oder Buchstaben anschließend wieder maschinell gelesen werden können. Vorteilhaft ist hierbei, daß das Erstellen des Tickets ohne besondere Hilfsmittel erfolgen kann. In einem weiteren Ausführungsbeispiel kann der Ergänzungscode mittels eines Druckers auf den Träger 5 aufgedruckt und somit eingetragen werden. In einem weiteren Ausführungsbeispiel werden mindestens Teile der Daten, die die gekaufte Leistung beschreiben, auf den Träger aufgedruckt, so beispielsweise die Art der Veranstaltung oder der Gültigkeitsmonat usw.

In einem weiteren bevorzugten Ausführungsbeispiel für ein erfindungsgemäßes Ticket enthält der Träger 5 ein zusätzliches Sicherheitsmerkmal, das in Figur 2 mit dem Bezugszeichen 12 gekennzeichnet wurde. Ein derartiges Sicherheitsmerkmal ist beispielsweise ein Wasserzeichen, ein Hologramm, ein Kippbild oder sonstige optisch variable Elemente.

In einem weiteren Ausführungsbeispiel wird der Ergänzungscode verschlüsselt oder versehen mit einer Signatur oder mit einer Prüfsumme versendet, so daß die Daten vor fremden Zugriff geschützt sind.

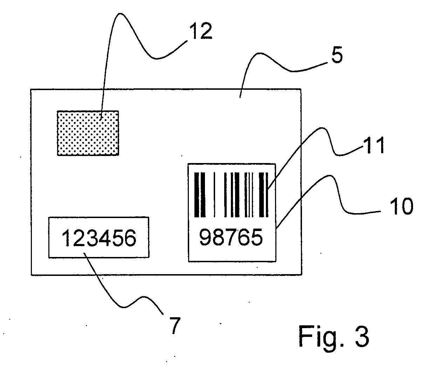

In Figur 3 ist ein weiteres Ausführungsbeispiel eines erfindungsgemäßen gültigen Tickets schematisch dargestellt. Das Ticket entspricht dem in Figur 2 dargestellten Ticket, gleiche Bezugszeichen bezeichnen gleiche Bestandteile des Tickets. Der Ergänzungscode 10 wird in diesem Ausführungsbeispiel zusätzlich durch einen maschinenlesbaren Code 11, der auf den Träger 5 aufgedruckt wird und mindestens teilweise nicht aus Ziffern und/oder Buchstaben besteht, dargestellt. In diesem Ausführungsbeispiel besteht der maschinenlesbare Code 11 aus einem Strichcode oder sonstigen 2D/3D-Barcodes.

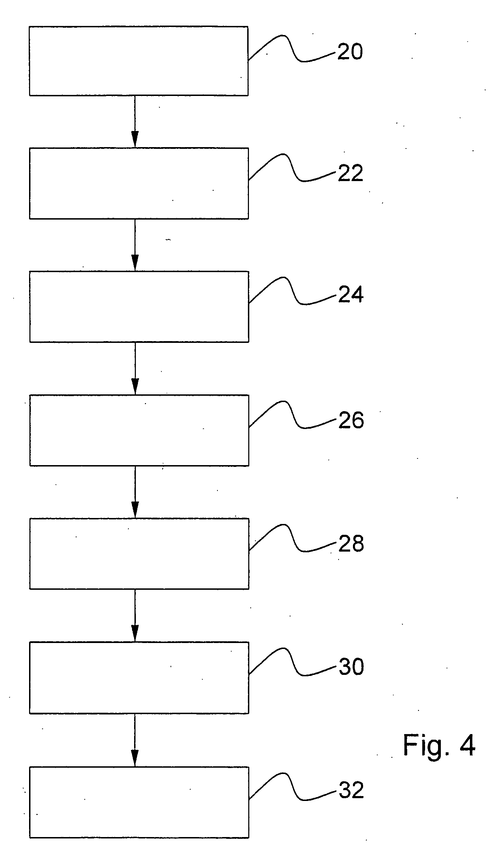

Das erfindungsgemäße Verfahren zum Erstellen eines gültigen Tickets wird im Folgenden anhand von Figur 4 genauer erläutert. In Figur 4 wird das Verfahren anhand eines Flußdiagramms dargestellt, wobei jeder Schritt durch ein Kästchen, die durch Pfeile verbunden sind, veranschaulicht wird. Die Pfeile repräsentieren dabei die Reihenfolge der durchzuführenden Schritte. In einem Schritt 20 erwirbt der Käufer einen Träger mit einem Basiscode, wobei, wie oben beschrieben, der Träger mit Basiscode auch kostenlos zur Verfügung gestellt werden kann.

In einem darauffolgenden Schritt 22 wählt sich der Käufer, der eine bestimmte Leistung, die mittels eines Tickets zugänglich ist, erwerben will, in ein Verkaufsportal ein. Dabei ist der Käufer mit dem Verkaufsportal elektronisch verbunden. In einem bevorzugten Ausführungsbeispiel ist dieses Verkaufsportal eine Internetseite, eine Telefonnummer im Festnetz oder einem mobilen Netz, wobei dort auch WAP oder UMTS genutzt werden kann. Im Falle einer Internetseite als Verkaufsportal benötigt der Käufer einen Personalcomputer oder eine andere Datenverarbeitungsanlage, die an das Internet angeschlossen sind. In diesem Fall werden auf der Internetseite die verschiedenen Ticketarten, die vom Käufer erworben werden können, angezeigt. Im Falle einer Telefonnummer als Verkaufsportal benötigt der Käufer ein Telefon, mittels dem er die entsprechende Telefonnummer wählen kann. Nach der Einwahl werden dem Käufer mittels sprachlicher Mittel die verschiedenen erwerbbaren Ticketarten vorgestellt.

In einem nächsten Schritt 24 wählt der Käufer eine bestimmte Ticketart aus und gibt weiterhin, wenn erforderlich, die Anzahl der Tickets und/oder die Anzahl der Personen, für die das Ticket gelten soll, und/oder die Art der Personen, für die das Ticket gelten soll, und/oder den Zeitpunkt oder den Zeitraum ein oder bekannt.

In darauffolgenden Schritt 26 gibt der Käufer den Basiscode an, der auf dem zugehörigen Träger verzeichnet ist. Im nächsten Schritt 28 bezahlt der Käufer bargeldlos, beispielsweise mit Kreditkarte durch Angabe seiner Kreditkartennummer, mittels elektronischem Lastschriftverfahren unter Angabe der Bankverbindung, mittels virtueller Guthabenkarte durch Angabe von Benutzername und Kennwort, mittels einer sogenannten Paybox durch Angabe einer Mobilfunknummer und anschließender Eingabe eines PIN oder mittels virtuellem Zahlungsmittel/Electronic Cash durch Nutzung eines sogenannten Wallets auf dem PC das gewünschte Ticket. Ist die Bezahlung erfolgt, dann wird im darauffolgenden Schritt 30 durch das Verkaufsportal (bzw. das sich dahinter verbergende Datenverarbeitungssystem) eine Zufallszahl (Ergänzungscode) ermittelt, die auch in einer, zu dem Datenverarbeitungssystem gehörenden Datenbank zusammen mit dem vom dem Käufer eingegebenen Basiscode und der Ticketart und ggf. mit weiteren Ticketdaten wie Anzahl der Personen, Art der Personen (Kind, Erwachsener) und/oder dem Gültigkeitsdatum oder dem Gültigkeitszeitraum gespeichert wird. Der Ergänzungscode wird dann an den Käufer übermittelt. In einem weiteren Schritt 32 trägt der Käufer den Ergänzungscode 10 auf dem Träger 5 ein oder druckt den Ergänzungscode wie oben beschrieben auf den Träger 5. In einem weiteren Ausführungsbeispiel werden mindestens Teile der Daten, die die gekaufte Leistung beschreiben, auf den Träger aufgedruckt, so beispielsweise die Art der Veranstaltung oder der Gültigkeitsmonat usw.

In einem weiteren Ausführungsbeispiel kann bei einer Benutzung eines Verkaufsportals über einen Schalter, wobei das am Schalter tätige Verkaufspersonal einen elektronischen Zugang zu einem als Verkaufsportal dienenden Datenverarbeitungssystem besitzt, die Bezahlung auch mittels Bargeld, Kreditkarte, Scheckkarte o.ä. erfolgen.

Wird nun die gekaufte und mittels des Tickets zugängliche Leistung erfindungsgemäß in Anspruch genommen, dann wird das Ticket mittels Entwerter gekennzeichnet, beispielsweise durch die Anbringung einer Lochung oder Stanzung und/oder durch einen Stempelaufdruck und/oder durch Abreißen eines bestimmten Abschnitts. Dazu ist der Entwerter mit Vorrichtungen versehen, die einen Stempel und/oder eine Stanzvorrichtung und/oder einen Locher und/oder eine Vorrichtung zum Abreißen eines bestimmten Abschnitts ausgestattet. Nach dem Einführen des Tickets in den Entwerter wird das Ticket mit der entsprechenden Kennzeichnung versehen. Eine derartige Kennzeichnung umfaßt beispielsweise eine Entwerternummer oder eine Entwerterbezeichnung und/oder das Entwertungsdatum, vorzugsweise mit Entwertungsuhrzeit, und/oder der Entwertungswochentag und/oder der Entwertungsmonat und/oder der Entwertungsbereich und/oder eine laufende Nummer eines Entwertungsvorgangs.

In einem weiteren bevorzugten Ausführungsbeispiel für ein Verfahren zur Inanspruchnahme einer Leistung erfaßt der Entwerter (ggf. auch zusätzlich) den Basiscode und den Ergänzungscode des Tickets. Ein derartiger Entwerter ist beispielsweise im Eingangsbereich eines Kinos oder eines Museums plaziert und mit einer Schranke versehen, die ohne Vorzeigen oder Eingabe des Tickets oder der Ticketdaten den Zugang des Nutzers zum Kino oder Museum verhindert. Der Entwerter ist mit der Datenbank, in der die Ticketdaten gespeichert sind, verbunden. Nach der Erfassung des Basiscodes und des Ergänzungscodes, die zusammen den Code bilden, werden diese Daten mit der Eintragung in der Datenbank verglichen. Bei Existenz des Codes wird die Leistung, die von dem Benutzer gerade in Anspruch genommen wird, mit den in der Datenbank zu dem Code eingetragenen Ticketdaten wie Tikketart, Anzahl der Personen usw. verglichen. Stimmt die Eintragung in der Datenbank mit der vom Benutzer begehrten Leistung überein, dann wird die Leistung für den Benutzer freigegeben und im Falle des angezogenen Beispiels die Schranke geöffnet, so daß der Benutzer das Kino oder Museum betreten kann. Existiert die Code-Kombination nicht und/oder stimmt die begehrte Leistung nicht mit der in der Datenbank anhand der Ticketdaten gespeicherten Leistung überein, dann wird die Leistung nicht für den Benutzer freigegeben.

In einem weiteren, einfacheren Ausführungsbeispiel ist der Vergleich der vom Benutzer begehrten Leistung mit der Eintragung in der Datenbank nicht notwendig, beispielsweise dann nicht, wenn nur eine einzige Leistung zum Kauf zur Verfügung stand. Die Leistung wird in diesem Fall dann für den Benutzer freigegeben, wenn der Code in der Datenbank enthalten war. Die Leistung wird weiterhin in diesem Fall dann nicht für den Benutzer freigegeben, wenn der Code nicht in der Datenbank enthalten war.

In einem bevorzugten Ausführungsbeispiel erfolgt die Erfassung des Codes mittels einer Kamera und mittels Bilderkennungsmethoden, in einem weiteren Ausführungsbeispiel kann die Erfassung des Codes auch durch eine Eingabe mittels einer Tastatur erfolgen.

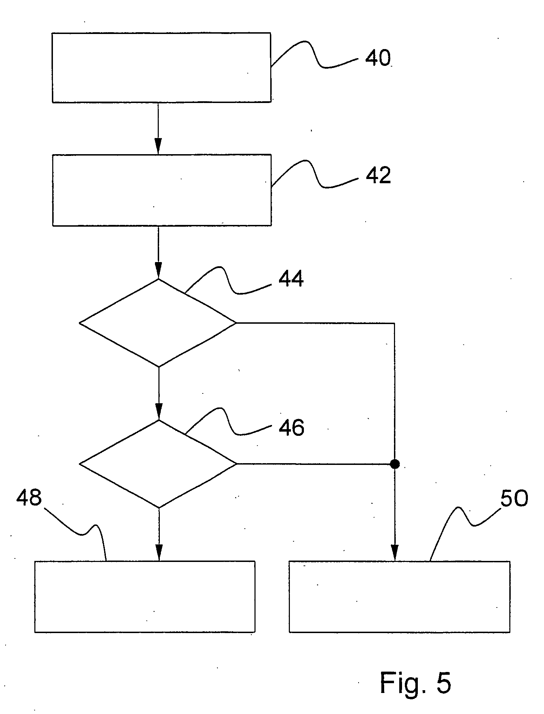

Wird nun ein Ticket, daß zur Inanspruchnahme der Leistung lediglich entwertet wird, kontrolliert, dann kommt das im Folgenden anhand von Figur 5 beschriebene Verfahren zum Einsatz. Die einzelnen Verfahrensschritte werden analog zu dem in Figur 4 dargestellten Verfahren anhand von Kästchen dargestellt, die mittels Pfeile, die die Richtung des Verfahrens beschreiben, verbunden sind.

Voraussetzung für die Durchführung des erfindungsgemäßen Verfahrens zur Kontrolle eines Tickets ist das Vorhandensein eines entwerteten Tickets beim kontrollierten Benutzer. Ist dies nicht der Fall, wird der Benutzer sofort wegen unrechtmäßiger Inanspruchnahme einer Leistung (bspw. einer Fahrt mit einem öffentlichen Verkehrsmittel) zur Rechenschaft gezogen. Des weiteren wird als Voraussetzung angenommen, daß die Kennzeichnung durch den Entwerter der tatsächlich in Anspruch genommenen Leistung entspricht. Dies kann der Kontrolleur durch Blick auf die Kennzeichnung des Entwerters sofort sehen. Beispielsweise vergleicht der Kontrolleur das Entwertungsdatum mit dem Datum des jeweiligen Tages und stellt fest, daß die Daten übereinstimmen. Entspricht die tatsächlich in Anspruch genommene Leistung nicht der Kennzeichnung des Entwerters, dann wird der Benutzer wiederum sofort wegen unrechtmäßiger Inanspruchnahme einer Leistung (bspw. einer Fahrt mit einem öffentlichen Verkehrsmittel) zur Rechenschaft gezogen. Diese Kontroll-Verfahren sind allgemein bekannt.

Ein erfindungsgemäßes Verfahren geht nun noch weiter. Ist nun ein entwertetes Ticket beim Benutzer vorhanden und stimmt die Entwertungs-Kennzeichnung mit der tatsächlich in Anspruch genommenen Leistung überein, wird in einem ersten Schritt 40 der Code, bestehend aus Basis- und Ergänzungscode, vom Kontrolleur in ein Kontrollgerät oder eine Kontrolleinrichtung eingegeben oder vom Kontrollgerät oder einer Kontrolleinrichtung erfaßt. Ein derartiges Kontrollgerät ist in einem bevorzugten Ausführungsbeispiel als Handgerät ausgeführt, das vom Kontolleur mitgeführt wird. In einem darauffolgenden Schritt 42 erfolgt die Eingabe in das Kontrollgerät oder die Erfassung mit dem Kontrollgerät von mindestens einem Bestandteil der Entwerter-Kennzeichnung. Die Eingabe des Codes und des mindestens einen Bestandteils der Entwerter-Kennzeichnung erfolgt in einem bevorzugten Ausführungsbeispiel mittels einer Tastatur, die Erfassung erfolgt in einem weiteren bevorzugten Ausführungsbeispiel mittels einer Kamera und unter Nutzung von Bilderkennungsmethoden. In einem darauffolgenden Schritt 44 wird in der mit dem Kontrollgerät verbundenen Datenbank untersucht, ob die Kombination aus Basis- und Ergänzungscode in der Datenbank eingetragen ist. Ist dies der Fall, dann wird das Verfahren mit Schritt 46 fortgeführt, bei dem die in der Datenbank zum eingegebenen Code zugehörigen Ticketdaten mit dem Bestandteil der Entwerter-Kennzeichnung verglichen werden. Beispielsweise ist in der Datenbank verzeichnet, daß das Ticket für einen bestimmten Monat, beispielsweise Mai, ausgestellt wurde. Der entsprechende Monat ist auch auf der Entwerter-Kennzeichnung eingetragen. Ergibt der Vergleich, daß die Ticketdaten der Datenbank mit dem Bestandteil der Entwerter-Kennzeichnung übereinstimmen, wird das Verfahren mit Schritt 48 fortgeführt. Für das angezogene Beispiel bedeutet dies, daß die Kennzeichnung des Entwerters ebenfalls den Monat Mai, beispielsweise als V (römische Fünf) enthielt. Der abschließende Schritt 48 beinhaltet, daß keine Beanstandung des Tickets durch den Kontrolleur erfolgt und der Benutzer die in Anspruch genommene Leistung weiterhin nutzen kann. Auf einer Anzeige des Kontrollgeräts wird in einem bevorzugten Ausführungsbeispiel dann eine entsprechende Meldung, beispielsweise "OK" oder "gültiges Ticket", erscheinen.

Ist nun die Kombination aus Basis- und Ergänzungscode nicht in der Datenbank eingetragen oder stimmt der Bestandteil der Entwerter-Kennzeichnung nicht mit den Ticketeintragungen überein, dann wird das Verfahren mit dem Schritt 50 weitergeführt, der beinhaltet, daß das Ticket beanstandet wird. In dem oben angezogenen Beispiel bedeutet dies, daß beispielsweise die Kennzeichnung des Entwerters eine VI (römische Sechs) enthielt, die den Monat Juni symbolisiert. Da das Ticket It. Datenbankeintrag jedoch für den Monat Mai gekauft war, liegt eine unrechtmäßige Benutzung der Leistung vor. In einem bevorzugten Ausführungsbeispiel der Erfindung wird auf einer Anzeige des Kontrollgeräts in diesem Fall eine entsprechende Meldung, beispielsweise "ungültiges Ticket", erscheinen.

Bestandteile der Entwerter-Kennzeichnung sind beispielsweise Markierungen, die die Art des Entwerters kennzeichnen sowie die zeitliche und/oder die räumliche Lokalisierung der Entwertung. Die Art des Entwerters wird beispielsweise anhand des Standort des Entwerters (z.B. Straßenbahn, U-Bahn) definiert. Die räumliche Lokalisation der Entwertung erfolgt beispielsweise durch eine bestimmte Zone der Verkehrsnetzes. Die zeitliche Lokalisation der Entwertung wird beispielsweise durch die Angabe des Entwertungstages, des Entwertungsmonats, des Entwertungsjahrs, der Entwertungszeit usw. erreicht.

In einem weiteren, einfacheren Ausführungsbeispiel des erfindungsgemäßen Verfahrens zur Kontrolle eines Tickets ist die zusätzliche Erfassung der Entwerter-Kennzeichnung und entsprechend der Vergleich der Entwerter-Kennzeichnung mit der Datenbankeintragung nicht notwendig. Hier wird das Ticket als gültig erkannt, wenn der Code in der Datenbank enthalten war. Das Ticket wird als ungültig erkannt, wenn der Code nicht in der Datenbank enthalten war. Dieses Verfahren kommt insbesondere dann zum Einsatz, wenn lediglich eine einzige Ticketart zum Verkauf angeboten wurde.

In einem anderen Ausführungsbeispiel können auch Datenbankauszüge in einem Speicher des Kontrollgeräts gespeichert sein, wobei der Speicherinhalt regelmäßig durch ein neues Laden auf den neuesten Stand gebracht werden muß. Der Basis- und Ergänzungscode sowie bestimmte Bestandteile der Entwerter-Kennzeichnung werden dann mit den Einträger dem im Kontrollgerät gespeicherten Datenbankauszug verglichen. Zum regelmäßigen Laden des im Kontrollgerät gespeicherten Datenbankauszugs können im Falle der Ausführung des Kontrollgeräts als Handgerät Ladestationen im Fahrzeug oder an bestimmten, für den Kontrolleur zugänglichen Punkten aufgestellt sein, von denen die Daten beispielsweise über eine Infrarot-Schnittstelle auf das Kontrollgerät übertragen werden. Die Ladestationen sind dabei elektronische mit der Datenbank des Verkaufsportals verbunden.

In einem weiteren Ausführungsbeispiel ist vorgesehen, daß der Käufer den Basiscode auf einem Identifikationsdokument, vorzugsweise auf einer Identifikationskarte mit sich trägt. Der Basiscode ist in diesem Fall nicht mehr auf dem Ticketträger enthalten. Der Basiscode kann in verschiedenen Formen auf dem Identifikationsdokument enthalten sein, z.B. kann er im Klartext als Ziffern- und/oder Buchstabenfolge oder als Barcode aufgedruckt oder in einem Speicherchip gespeichert sein. Die Erstellung des Tickets erfolgt analog zum oben Beschriebenen, jedoch wird der Basiscode nun von dem Identifikationsdokument gelesen. Dies kann zum einen visuell durch den Käufer geschehen oder durch einen Barcodereader oder durch einen Chipkartenleser, in die das Identifikationsdokument jeweils eingeführt wird. Die Art des Lesens des Basiscodes erfolgt entsprechend der Art und Weise, in welcher der Basiscode auf dem Identifikationsdokument enthalten ist. Der Ergänzungscode wird analog zu der oben beschriebenen Vorgehensweise zufällig ermittelt.

Das Erstellen des Tickets kann nach der Ermittlung des Ergänzungscodes zum einen auf einem Träger erfolgen, wobei auf den Träger zumindestens der Ergänzungscode eingetragen wird. In einem weiteren Ausführungsbeispiel kann es vorgesehen sein, auch den Basiscode auf dem Träger einzutragen, d.h. manuell in dafür vorgesehene Felder einzuschreiben oder auf den Träger aufzudrucken. Zum anderen ist es möglich, das gesamte Ticket nach der Ermittlung des Ergänzungscodes mit dem Ergänzungscode und ggf. auch dem Basiscode auszudrucken. In diesem Fall werden dem Käufer nach der Ermittlung des Ergänzungscodes Bilddaten übertragen, die zum Ausdrucken benutzt werden. Diese Bilddaten können auch Daten, die die gekaufte Leistung beschreiben, enthalten.

Die Inanspruchnahme der gekauften Leistung und die Kontrolle des Tickets erfolgt analog zur oben beschriebenen Vorgehensweise, wobei zusätzlich zum Ticket, wenn der Basiscode auf dem Ticket angegeben ist - auf Verlangen oder wenn der Basiscode nicht auf dem Ticket angegeben ist, auch das Identifikationsdokument vorgelegt werden muss und der Basiscode zu Vergleichszwecken gelesen wird. Wenn der Basiscode auf dem Ticket angegeben ist, wird geprüft, ob der auf dem Ticket angegebene Basiscode mit dem Basiscode des Identifikationsdokuments übereinstimmt. Ist der Basiscode nicht auf dem Ticket angegeben, dann wird der Basiscode des Identifikationsdokuments direkt zur Überprüfung der Datenbankinhalte herangezogen. Das Lesen des Basiscodes vom Identifkationsdokument erfolgt analog zur oben beschriebenen Vorgehensweise beim Kauf des Tickets.

Dieses Ausführungsbeispiel der Erfindung hat den Vorteil, daß eine einfache Erstellung von Tickets möglich ist ohne eine vorherige Beschaffung von Ticketträgern durch den Käufer. Des weiteren kann die Kontrolle des Tickets sicherer gestaltet werden, da ein eigenes Format für die Identifikationsdokuments-Daten bereitgestellt werden kann.

## Patentansprüche

1. Ticket, das aus einem Träger mit einem Code gebildet ist, wobei sich der Code aus einem Basiscode und einen Ergänzungscode zusammensetzt, wobei der Ergänzungscode aus einer nach Abschluß des Verkaufs der mit dem Ticket zugänglichen Leistung ermittelten zufälligen Ziffernfolge oder Ziffern- und Buchstabenfolge oder Buchstabenfolge gebildet und nachträglich eintragbar ist.

2. Ticket, dessen Gültigkeit sich aus einem Code ergibt, wobei sich der Code aus einem Basiscode und einem Ergänzungscode zusammensetzt, wobei der Ergänzungscode aus einer nach Abschluß des Verkaufs der mit dem Ticket zugänglichen Leistung ermittelten zufälligen Ziffernfolge oder Ziffern- und Buchstabenfolge oder Buchstabenfolge gebildet und auf einem Ticketträger eintragbar ist.

3. Ticket nach Anspruch 2, **dadurch gekennzeichnet, daß** der Basiscode auf einem Identifikationsdokument enthalten ist.

4. Ticket nach einem der Ansprüche 1 bis 3, **dadurch gekennzeichnet, daß** das Ticket vor oder bei Inanspruchnahme der Leistung entwertbar ist.

5. Ticket nach einem der Ansprüche 1 bis 4, **dadurch gekennzeichnet, daß** der Träger mit mindestens einem Sicherheitsmerkmal wie Hologramm, Wasserzeichen oder dergl. versehen ist.

6. Ticket nach einem der Ansprüche 1 bis 5, **dadurch gekennzeichnet, daß** der Basiscode als Ziffernfolge oder Ziffern- und Buchstabenfolge oder Buchstabenfolge oder als Ziffernfolge oder Ziffern- und Buchstabenfolge oder Buchstabenfolge zusätzlich mit einer maschinell lesbaren Umsetzung der Ziffernfolge oder Ziffern- und Buchstabenfolge oder Buchstabenfolge auf dem Träger abgebildet ist.

7. Ticket nach einem der Ansprüche 1 bis 6, **dadurch gekennzeichnet, daß** der Ergänzungscode als Ziffernfolge oder Ziffern- und Buchstabenfolge oder Buchstabenfolge oder als maschinell lesbare Umsetzung der Ziffernfolge oder Ziffern- und Buchstabenfolge oder Buchstabenfolge auf dem Träger abgebildet ist.

8. Ticket nach einem der Ansprüche 6 oder 7, **dadurch gekennzeichnet, daß** die maschinell lesbare Umsetzung der Ziffernfolge oder Ziffern- und Buchstabenfolge oder Buchstabenfolge durch einen Strichcode oder einen sonstigen zweidimensionalen oder dreidimensionalen Barcode erfolgt.

9. Ticket nach einem der Ansprüche 1 bis 8, **dadurch gekennzeichnet, daß** der Träger aus Papier- oder Plastikmaterial besteht.

10. Verfahren zum Erstellen eines gültigen Tickets,
wobei der Käufer als Grundlage des Tickets einen Träger, der mit einem Basiscode versehen ist, besitzt,
wobei der Käufer mittels eines elektronischen Zugangs zu einem von einem Betreiber betriebenen Verkaufsportal eine bestimmte Leistung, die mit dem Ticket zugänglich ist, unter Angabe des Basiscodes des Trägers erwirbt,
wobei nach Abschluß des Verkaufs der Leistung eine zufällige Ziffernfolge oder eine zufällige Ziffern- und Buchstabenfolge oder eine zufällige Buchstabenfolge als Ergänzungscode ermittelt und zum Käufer elektronisch übertragen wird,
wobei der Käufer zum Erreichen der Gültigkeit des Tickets den Ergänzungscode auf dem mit dem Basiscode versehenen Träger einträgt,
wobei der Code, bestehend aus Basiscode und Ergänzungscode, und Daten, die die zugehörige, verkaufte Leistung beschreiben, in einer zum Betreiber zugehörigen Datenbank gespeichert werden.

11. Verfahren zum Erstellen eines gültigen Tickets,
wobei der Käufer als Grundlage des Tickets einen Basiscode besitzt,
wobei der Käufer mittels eines elektronischen Zugangs zu einem von einem Betreiber betriebenen Verkaufsportal eine bestimmte Leistung, die mit dem Ticket zugänglich ist, unter Angabe des Basiscodes erwirbt,
wobei nach Abschluß des Verkaufs der Leistung eine zufällige Ziffernfolge oder eine zufällige Ziffern- und Buchstabenfolge oder eine zufällige Buchstabenfolge als Ergänzungscode ermittelt und zum Käufer elektronisch übertragen wird,
wobei der Käufer zum Erreichen der Gültigkeit des Tickets den Ergänzungscode auf dem Ticketträger einträgt,
wobei der Code, bestehend aus Basiscode und Ergänzungscode, und Daten, die die zugehörige, verkaufte Leistung beschreiben, in einer zum Betreiber zugehörigen Datenbank gespeichert werden.

12. Verfahren nach Anspruch 11, **dadurch gekennzeichnet, daß** der Basiscode auf einem Identifikationsdokument enthalten ist.

13. Verfahren nach einem der Ansprüche 10 bis 11, **dadurch gekennzeichnet, daß** die Träger frei erhältlich sind.

14. Verfahren nach einem der Ansprüche 10 bis 13, **dadurch gekennzeichnet, daß** das Verkaufsportal eine Internetseite, eine Festnetz-Telefonnummer oder ein Mobil-Telefonnummer, vorzugsweise unter Nutzung von WAP oder UMTS, ist.

15. Verfahren nach einem der Ansprüche 10 bis 14, **dadurch gekennzeichnet, daß** der Verkauf der Leistung durch Bezahlung der Leistung abgeschlossen wird, wobei die Bezahlung mittels Bargeld oder bargeldlos erfolgt, wobei die bargeldlose Bezahlung mit einer Kreditkarte durch Angabe einer Kreditkartennummer, mittels eines elektronischen Lastschriftverfahrens unter Angabe der Bankverbindung, mittels einer virtuellen Guthabenkarte durch Angabe von Benutzername und Kennwort, mittels einer Paybox durch Angabe einer Mobilfunknummer und anschließender Eingabe eines PIN oder mittels eines virtuellen Zahlungsmittels/Electronic Cash durch Nutzung eines Wallets auf dem PC erfolgt.

16. Verfahren nach einem der Ansprüche 10 bis 15, **dadurch gekennzeichnet, daß** die Leistung eine oder mehrere Fahrten mit öffentlichen Verkehrsmitteln wie Bus, Bahn oder Flugzeug oder der ein- oder mehrmalige Besuch einer Veranstaltung (Konzert oder Kino oder Vortrag oder Lesung) oder den Eintritt in eine Ausstellung oder ein Museum oder eine Sporteinrichtung mit einer oder mehreren Personen umfaßt.

17. Verfahren zur Inanspruchnahme einer Leistung, die mittels eines nach einem der Ansprüche 10 bis 16 erstellten Tickets einlösbar ist, **dadurch gekennzeichnet, daß** das Ticket mittels einer Kennzeichnung durch einen Entwerter entwertet wird.

18. Verfahren nach Anspruch 13, **dadurch gekennzeichnet, daß** die Kennzeichnung mittels eines Stempelaufdrucks und/oder eine Lochung oder Stanzung und/oder das Abreißen eines bestimmten Abschnitts erfolgt.

19. Verfahren zur Inanspruchnahme einer Leistung, die mittels eines nach einem der Ansprüche 10 bis 16 erstellten Tickets einlösbar ist, **dadurch gekennzeichnet, daß** der Entwerter einen zugehörigen Code, bestehend aus Basiscode und Ergänzungscode erfaßt, wobei mindestens der Ergänzungscode auf dem Ticketträger eingetragen ist,
wobei der mit der zugehörigen Datenbank mindestens zeitweise verbundene Entwerter die Überprüfung der Existenz des Codes in der zugehörigen Datenbank veranlaßt,
wobei bei Existenz des Codes in der zugehörigen Datenbank die Leistung für den Benutzer freigegeben wird,
wobei bei Nichtexistenz des Codes in der zugehörigen Datenbank die Leistung für den Benutzer nicht freigegeben wird.

20. Verfahren zur Inanspruchnahme einer Leistung, die mittels eines nach einem der Ansprüche 10 bis 16 erstellten Tickets einlösbar ist, **dadurch gekennzeichnet, daß** der Entwerter einen zugehörigen Code, bestehend aus Basiscode und Ergänzungscode erfaßt, wobei mindestens der Ergänzungscode auf dem Ticketträger eingetragen ist,
wobei der mit der zugehörigen Datenbank mindestens zeitweise verbundene Entwerter die Überprüfung der Existenz des Codes in der zugehörigen Datenbank veranlaßt und
bei Existenz des Codes die Daten, die die zugehörige, verkaufte Leistung beschreiben, mit der vom Benutzer begehrten Leistung vergleicht,
wobei bei Übereinstimmung der Daten, die die zugehörige, verkaufte Leistung beschreiben, mit der in Anspruch genommenen Leistung diese für den Benutzer freigegeben wird,
wobei bei Nichtexistenz des Codes oder bei Nichtübereinstimmung der Daten, die die zugehörige, verkaufte Leistung beschreiben, mit der in Anspruch genommenen Leistung die Leistung nicht freigegeben wird.

21. Verfahren nach einem der Ansprüche 19 bis 20, **dadurch gekennzeichnet, daß** die Freigabe der Leistung in der Datenbank in einem Feld, der zu dem Code zugehörig ist, registriert wird oder bei Freigabe der Leistung der Code und die zugehörigen Daten in der Datenbank gelöscht werden.

22. Verfahren nach einem der Ansprüche 19 bis 21, **dadurch gekennzeichnet, daß** die Erfassung des Basiscodes und/oder des Ergänzungscodes durch eine Aufnahme mittels einer Kamera und mittels Bilderkennungsmethoden erfolgt.

23. Verfahren nach einem der Ansprüche 19 bis 21, **dadurch gekennzeichnet, daß** die Erfassung des Basiscodes mittels Barcodereader oder mittels eines Chipkartenlesers erfolgt.

24. Verfahren nach einem der Ansprüche 19 bis 21, **dadurch gekennzeichnet, daß** die Erfassung des Basiscodes und/oder des Ergänzungscodes durch Eingabe der Ziffernfolge oder Ziffern- und Buchstabenfolge oder Buchstabenfolge auf einer Tastatur erfolgt.

25. Verfahren zur Kontrolle eines Tickets zur Nutzung einer Leistung, die nach einem der in den Ansprüchen 17 bis 18 beschriebenen Verfahren in Anspruch genommen wird,
wobei eine Kontrolleinrichtung, die mit einer zum Betreiber zugehörigen Datenbank mindestens zeitweise verbunden ist oder in einem Speicher mindestens einen Auszug der zugehörigen Datenbank enthält, den zugehörigen Code, bestehend aus Basiscode und Ergänzungscode erfaßt, wobei mindestens der Ergänzungscode auf dem Ticketträger eingetragen ist,
wobei die Kontrolleinrichtung die Überprüfung der Existenz des Codes in der zugehörigen Datenbank oder in dem zugehörigen Datenbankauszug veranlaßt und
bei Existenz des Codes das Ticket für die in Anspruch genommene Leistung als gültig erklärt wird,
wobei bei Nichtexistenz des Codes das Ticket für die in Anspruch genommene Leistung als ungültig erklärt wird.

26. Verfahren zur Kontrolle eines Tickets zur Nutzung einer Leistung, die nach einem der in den Ansprüchen 17 bis 18 beschriebenen Verfahren in Anspruch genommen wird,
wobei eine Kontrolleinrichtung, die mit einer zum Betreiber zugehörigen Datenbank mindestens zeitweise verbunden ist oder in einem Speicher mindestens einen Auszug der zugehörigen Datenbank enthält, den zugehörigen Code, bestehend aus Basiscode und Ergänzungscode erfaßt, wobei mindestens der Ergänzungscode auf dem Ticketträger eingetragen ist, und mindestens einem fest vorgegebenen Bestandteil der Kennzeichnung durch den Entwerter erfaßt,
wobei die Kontrolleinrichtung die Überprüfung der Existenz des Codes in der zugehörigen Datenbank oder in dem zugehörigen Datenbankauszug veranlaßt und
bei Existenz des Codes die Daten der zugehörigen Datenbank oder des zugehörigen Datenbankauszugs, die die zugehörige, verkaufte Leistung beschreiben, mit dem mindestens einen fest vorgegebenen Bestandteil der Kennzeichnung durch den Entwerter vergleicht,
wobei bei Übereinstimmung der Daten, die die zugehörige, verkaufte Leistung beschreiben, mit dem mindestens einen fest vorgegebenen Bestandteil der Kennzeichnung durch den Entwerter das Ticket für die in Anspruch genommene Leistung als gültig erklärt wird,
wobei bei Nichtexistenz des Codes oder bei Nichtübereinstimmung der Daten, die die zugehörige, verkaufte Leistung beschreiben, mit dem mindestes einen, fest vorgegebenen Bestandteil der Kennzeichnung durch den Entwerter das Ticket für die in Anspruch genommene Leistung als ungültig erklärt wird.

27. Verfahren nach einem der Ansprüche 25 bis 26, **dadurch gekennzeichnet, daß** die Erfassung des Basiscodes und/oder des Ergänzungscodes und/oder des mindestens einen, fest vorgegebenen Bestandteils der Kennzeichnung durch eine Kameraaufnahme und mittels Bilderkennungsmethoden erfolgt.

28. Verfahren nach einem der Anspruch 25 bis 27, **dadurch gekennzeichnet, daß** die Erfassung des Basiscodes und/oder des Ergänzungscodes und/oder des mindestens einen, fest vorgegebenen Bestandteils der Kennzeichnung durch Eingabe der Ziffernfolge oder Ziffern- und Buchstabenfolge oder Buchstabenfolge auf einer Tastatur erfolgt.

29. Verfahren nach einem der Ansprüche 26 bis 28, **dadurch gekennzeichnet, daß** der mindestens eine, fest vorgegebene Bestandteil der Kennzeichnung durch den Entwerter eine bestimmte Entwertungsmarkierung, vorzugsweise eine Entwerternummer oder eine Entwerterbezeichnung und/oder das Entwertungsdatum, vorzugsweise mit Entwertungsuhrzeit, und/oder der Entwertungswochentag und/oder der Entwertungsmonat und/oder der Entwertungsbereich und/oder eine laufende Nummer eines Entwertungsvorgangs ist.

30. Vorrichtung zum Erstellen eines gültigen Tickets, wobei
ein elektronischer Zugang zu einem von einem Betreiber betriebenen Verkaufsportal vorgesehen ist,
wobei über den Verkaufsportal eine bestimmte Leistung, die mit dem Ticket zugänglich ist, erwerbbar ist,
wobei dem Verkaufsportal ein Basiscode eines Ticketträgers übermittelbar ist,
wobei nach Abschluß des Verkaufs der Leistung eine zufällige Ziffernfolge oder eine zufällige Ziffern- und Buchstabenfolge oder eine zufällige Buchstabenfolge als Ergänzungscode ermittelbar und elektronisch übertragbar ist, wobei
zum Erreichen der Gültigkeit des Tickets der Ergänzungscode auf dem mit dem Basiscode versehenen Träger eintragbar ist, wobei
der Code, bestehend aus Basiscode und Ergänzungscode, und Daten, die die zugehörige, verkaufte Leistung beschreiben, in einer zum Betreiber zugehörigen Datenbank zu Kontrollzwecken gespeichert werden.

31. Vorrichtung zum Erstellen eines gültigen Tickets, wobei
ein elektronischer Zugang zu einem von einem Betreiber betriebenen Verkaufsportal vorgesehen ist,
wobei über den Verkaufsportal eine bestimmte Leistung, die mit dem Ticket zugänglich ist, erwerbbar ist,
wobei dem Verkaufsportal ein Basiscode übermittelbar ist,
wobei nach Abschluß des Verkaufs der Leistung eine zufällige Ziffernfolge oder eine zufällige Ziffern- und Buchstabenfolge oder eine zufällige Buchstabenfolge als Ergänzungscode ermittelbar und elektronisch übertragbar ist, wobei
zum Erreichen der Gültigkeit des Tickets der Ergänzungscode auf dem Ticketträger eintragbar ist, wobei
der Code, bestehend aus Basiscode und Ergänzungscode, und Daten, die die zugehörige, verkaufte Leistung beschreiben, in einer zum Betreiber zugehörigen Datenbank zu Kontrollzwecken gespeichert werden.

32. Vorrichtung nach Anspruch 31, **dadurch gekennzeichnet, daß** der Basiscode auf einem Identifikationsdokument enthalten ist.

33. Vorrichtung nach einem der Ansprüche 30 bis 32, **dadurch gekennzeichnet, daß** das Verkaufsportal eine Internetseite, eine Festnetz-Telefonnummer oder ein Mobil-Telefonnummer, vorzugsweise unter Nutzung von WAP oder UMTS, ist.

34. Vorrichtung nach einem der Ansprüche 30 bis 33, **dadurch gekennzeichnet, daß** eine Datenverarbeitungsanlage und/oder ein Telefon vorgesehen ist, die den elektronische Zugang zu dem Verkaufsportal erlauben.

35. Vorrichtung nach einem der Ansprüche 30 bis 34, **dadurch gekennzeichnet, daß** der Verkauf der Leistung durch Bezahlung der Leistung abschließbar ist, wobei die Bezahlung mittels Bargeld oder bargeldlos erfolgt, wobei die bargeldlose Bezahlung mit einer Kreditkarte durch Angabe einer Kreditkartennummer, mittels eines elektronischen Lastschriftverfahrens unter Angabe der Bankverbindung, mittels einer virtuellen Guthabenkarte durch Angabe von Benutzername und Kennwort, mittels einer Paybox durch Angabe einer Mobilfunknummer und anschließender Eingabe eines PIN oder mittels eines virtuellen Zahlungsmittels/Electronic Cash durch Nutzung eines Wallets auf dem PC erfolgt.

36. Vorrichtung nach einem der Ansprüche 30 bis 35, **dadurch gekennzeichnet, daß** die Leistung eine oder mehrere Fahrten mit öffentlichen Verkehrsmitteln wie Bus, Bahn oder Flugzeug oder der ein- oder mehrmalige Besuch einer Veranstaltung (Konzert oder Kino oder Vortrag oder Lesung) oder den Eintritt in eine Ausstellung oder ein Museum oder eine Sporteinrichtung mit einer oder mehreren Personen umfaßt.

37. Entwerter, der zur Inanspruchnahme einer Leistung bedient wird, die mittels eines nach einem der Ansprüche 10 bis 16 erstellten Tickets einlösbar ist, **dadurch gekennzeichnet, daß** das eingeführte Ticket mit einer Kennzeichnung versehbar ist.

38. Entwerter nach Anspruch 37, **dadurch gekennzeichnet, daß** die Kennzeichnung mittels eines Stempelaufdrucks und/oder eine Lochung oder Stanzung und/oder das Abreißen eines bestimmten Abschnitts erfolgt.

39. Entwerter nach Anspruch 37, **dadurch gekennzeichnet, daß** die Kennzeichnung eine bestimmte Entwertungsmarkierung, vorzugsweise eine Entwerternummer oder eine Entwerterbezeichnung und/oder das Entwertungsdatum, vorzugsweise mit Entwertungsuhrzeit, und/oder der Entwertungswochentag und/oder der Entwertungsmonat und/oder der Entwertungsbereich und/oder eine laufende Nummer eines Entwertungsvorgangs ist.

40. Entwerter, der zur Inanspruchnahme einer Leistung bedient wird, die mittels eines nach einem der Ansprüche 10 bis 16 erstellten Tickets einlösbar ist, **dadurch gekennzeichnet, daß** mittels des Entwerters der zugehörige Code, bestehend aus Basiscode und Ergänzungscode erfaßbar ist, wobei mindestens der Ergänzungscode auf dem Ticketträger eingetragen ist, wobei mittels dem mit der zugehörigen Datenbank mindestens zeitweise verbundenen Entwerter die Überprüfung der Existenz des Codes in der zugehörigen Datenbank veranlaßbar ist und
bei Existenz des Codes die in Anspruch genommene Leistung für den Benutzer freigebbar ist,
wobei bei Nichtexistenz des Codes die Leistung für den Benutzer nicht freigebbar ist.

41. Entwerter, der zur Inanspruchnahme einer Leistung bedient wird, die mittels eines nach einem der Ansprüche 10 bis 16 erstellten Tickets einlösbar ist, **dadurch gekennzeichnet, daß** mittels des Entwerters der zugehörige Code, bestehend aus Basiscode und Ergänzungscode erfaßbar ist, wobei mindestens der Ergänzungscode auf dem Ticketträger eingetragen ist, wobei mittels dem mit der zugehörigen Datenbank mindestens zeitweise verbundenen Entwerter die Überprüfung der Existenz des Codes in der zugehörigen Datenbank veranlaßbar ist und
bei Existenz des Codes die Daten, die die zugehörige, verkaufte Leistung beschreiben, mit der vom Benutzer in Anspruch genommenen Leistung vergleichbar ist,
wobei bei Übereinstimmung der Daten, die die zugehörige, verkaufte Leistung beschreiben, mit der in Anspruch genommenen Leistung diese für den Benutzer freigegebbar ist,
wobei bei Nichtexistenz des Codes oder bei Nichtübereinstimmung der Daten, die die zugehörige, verkaufte Leistung beschreiben, mit der in Anspruch genommenen Leistung die Leistung nicht freigegebbar ist.

42. Entwerter nach einem der Ansprüche 40 bis 41, **dadurch gekennzeichnet, daß** die Freigabe der Leistung in der Datenbank in einem Feld, der zu dem Code zugehörig ist, registriert wird oder bei Freigabe der Leistung der Code und die zugehörigen Daten in der Datenbank gelöscht werden.

43. Entwerter nach einem der Ansprüche 40 bis 42, **dadurch gekennzeichnet, daß** die Erfassung des Basiscodes und/oder des Ergänzungscodes durch eine Aufnahme mittels einer Kamera und mittels Bilderkennungsmethoden durchführbar ist.

44. Entwerter nach einem der Ansprüche 40 bis 42, **dadurch gekennzeichnet, daß** die Erfassung des Basiscodes und/oder des Ergänzungscodes durch Eingabe der Ziffernfolge oder Ziffern- und Buchstabenfolge oder Buchstabenfolge auf einer Tastatur.

45. Kontrolleinrichtung für ein Ticket zur Nutzung einer Leistung, die nach einem der in den Ansprüchen 17 bis 18 beschriebenen Verfahren in Anspruch genommen wird, wobei
die Kontrolleinrichtung mit einer zum Betreiber des Verkaufsportals der Leistung zugehörigen Datenbank mindestens zeitweise verbunden ist oder mindestens einen Auszug der zugehörigen Datenbank in einem Speicher enthält,
wobei der zugehörige Code, bestehend aus Basiscode und Ergänzungscode erfaßbar ist, wobei mindestens der Ergänzungscode auf dem Ticketträger eingetragen ist,
wobei die Überprüfung der Existenz des Codes in der zugehörigen Datenbank oder im zugehörigen Datenbank-Auszug veranlaßbar und
bei Existenz des Codes das Ticket für die in Anspruch genommene Leistung als gültig erklärbar ist,
wobei bei Nichtexistenz des Codes das Ticket für die in Anspruch genommene Leistung als ungültig erklärbar ist.

46. Kontrolleinrichtung für ein Ticket zur Nutzung einer Leistung, die nach einem der in den Ansprüchen 17 bis 18 beschriebenen Verfahren in Anspruch genommen wird, wobei
die Kontrolleinrichtung mit einer zum Betreiber des Verkaufsportals der Leistung zugehörigen Datenbank mindestens zeitweise verbunden ist oder mindestens einen Auszug der zugehörigen Datenbank in einem Speicher enthält,
wobei der zugehörige Code, bestehend aus Basiscode und Ergänzungscode erfaßbar ist, wobei mindestens der Ergänzungscode auf dem Ticketträger eingetragen ist, und mindestens ein fest vorgegebenen Bestandteil der Kennzeichnung durch den Entwerter erfaßbar ist,
wobei die Überprüfung der Existenz des Codes in der zugehörigen Datenbank oder im zugehörigen Datenbank-Auszug veranlaßbar und
bei Existenz des Codes die Daten der zugehörigen Datenbank oder des zugehörigen Datenbank-Auszugs, die die zugehörige, verkaufte Leistung beschreiben, mit dem mindestens einen fest vorgegebenen Bestandteil der Kennzeichnung durch den Entwerter vergleichbar ist,
wobei bei Übereinstimmung der Daten, die die zugehörige, verkaufte Leistung beschreiben, mit dem mindestens einen fest vorgegebenen Bestandteil der Kennzeichnung durch den Entwerter das Ticket für die in Anspruch genommene Leistung als gültig erklärbar ist,
wobei bei Nichtexistenz des Codes oder bei Nichtübereinstimmung der Daten, die die zugehörige, verkaufte Leistung beschreiben, mit dem mindestes einen, fest vorgegebenen Bestandteil der Kennzeichnung durch den Entwerter das Ticket für die in Anspruch genommene Leistung als ungültig erklärbar ist.

47. Kontrolleinrichtung nach einem der Anspruch 45 bis 46, **dadurch gekennzeichnet, daß** die Erfassung des Codes und/oder des mindestens einen, fest vorgegebenen Bestandteils der Kennzeichnung durch eine Kamera und mittels Bilderkennungsmethoden oder mittels Eingabe über eine Tastatur durchführbar ist.

48. Kontrolleinrichtung nach einem der Ansprüche 45 bis 47, **dadurch gekennzeichnet, daß** der mindestens eine, fest vorgegebene Bestandteil der Kennzeichnung eine bestimmte Entwertungsmarkierung, vorzugsweise eine Entwerternummer oder eine Entwerterbezeichnung und/oder das Entwertungsdatum, vorzugsweise mit Entwertungsuhrzeit, und/oder der Entwertungswochentag und/oder der Entwertungsmonat und/oder der Entwertungsbereich und/oder eine laufende Nummer eines Entwertungsvorgangs ist.
